# EUROPEAN PATENT SPECIFICATION

(11) **EP 0 687 450 B1**
(45) Date of publication and mention of the grant of the patent: **25.08.1999**
(21) Application number: 94109414.6
(22) Date of filing: 17.06.1994
(51) Int. Cl.: A61C 8/00

(54) **Dental implant**
Zahnimplantat
Implant dentaire

(43) Date of publication of application: 20.12.1995
(73) Proprietor: SOADCO S.L., Escaldes - Engordany (AD)
(72) Inventor: Padros Fradera, Alejandro, E-08006 Barcelona (ES)
(74) Representative: SUGRANES - VERDONCES - FERREGÜELA

(56) References cited:
- EP-A- 0 075 525
- DE-A- 2 540 077
- FR-A- 2 610 820
- US-A- 3 435 526

## Description

The object of the present invention is a dental implant used as supports for fixing dental prostheses. A dental implant comprising the features defined in the preamble of claim 1 is disclosed in FR-A-2 610 820.

### BACKGROUND OF THE INVENTION

As is already common practice, the fitting of a dental prosthesis is carried out by first securing a dental implant to the maxilla, said implant acting as a base for fixing said prosthesis once the implant has become integrated into the bone.

In particular, bolts for dental implants are known and which basically consist of a generally cylindrically shaped main body, provided externally with a screw thread for securing it by screwing to the maxilla, said main body being made of a metallic material, preferably titanium. A trunco-conical section is preferably arranged at the external end of said main body, its smaller base being joined to said screw thread, whilst its larger base extends in the forms of a prismatic protuberance of preferably hexagonal cross section and provided with a threaded axial hole, said protuberance enabling the main body to be screwed into the maxilla by means of a tool such as a spanner.

Also known is a removably-mountable cap which is secured to the main body by means of a fixing bolt which is screwed into the axial hole of said prismatic protuberance, said removably-mountable cap being secured after a certain amount of time, i.e. when the implant is firmly fixed in the maxilla. Afterwards, the removably-mountable cap is withdrawn and replaced with the dental prosthesis, which is joined to the prismatic protuberance of the main body by means of a bolt screwed into said axial orifice.

With this type of dental implant, the fitting of the dental prosthesis requires the prior extraction of the removably-mountable cap which, under certain circumstances, may present difficulties with the resulting aggravation for the patient.

Recently, caps that are snapped onto the prismatic protuberance are being used and which do not need to be extracted in order to fit the prosthesis, Nevertheless, the fixing of these caps leaves a lot to be desired.

### DESCRIPTION OF THE INVENTION

In order to solve the problems associated with the currently known bolts for implants, a new type of dental implant is disclosed.

The dental implant which forms the object of the present invention is characterized essentially in that the external edges of said prismatic protuberance are provided with notches which define a threading suitable for receiving the internal thread made in the base of a pre-prosthetic collar provided with a coaxial through hole, wider at the base, and through which passes the bolt for fixing the prosthesis to the implant, all in such a way that said pre-prosthetic collar is adapted to be fitted solidly by screwing onto said prismatic protuberance without the need for any additional bolts.

### BRIEF DESCRIPTION OF THE DRAWINGS

The accompanying drawings show by way of non-limiting example a preferred embodiment of the dental implant which forms the object of the present invention.
Figure 1 is a perspective view of the external end of the main body and the pre-prosthetic collar of the dental implant of the invention; and
Figure 2 shows a longitudinal sectional view of the dental implant of the invention to which a prosthesis is fitted.

### DESCRIPTION OF A PREFERRED EMBODIMENT

It can be seen in said drawings that the dental implant which forms the object of the present invention comprises the main body 1 and the pre-prosthetic collar 2. For clarity, only part of the main body 1 is shown. Thus, it is possible to see the screw thread 3 on the main body 1, said screw thread extending along the main body 1 and enabling it to be fixed by screwing to the maxilla, the coaxial trunco-conical section 4 and the prismatic protuberance 5, which is coaxial and of hexagonal cross section, arranged on the larger base of said section 4.

The coaxial trunco-conical section 4 and the prismatic protuberance 5 define a flat-surfaced intermediate step 6 on which the pre-prosthetic collar is seated.

The prismatic protuberance 5 is provided centrally with a threaded hole 7 which extends a relatively reduced distance into the trunco-conical section 5 and which is the correct size for receiving the bolt 8 for fixing the dental prosthesis 9.

The lateral edges 10 of the prismatic protuberance 5 are each provided with notches 11 that are dimensioned and arranged so as to define a screw thread suitable for enabling the pre-prosthetic collar 2 to be fitted by screwing.

In this example of an embodiment of the dental implant which forms the object of the invention illustrated in the drawings, the pre-prosthetic collar 2 comprises two longitudinally joined sections: a first cylindrical section 12, or the base of the pre-prosthetic collar 2, whose outer diameter is equal to the diameter of the larger base of the coaxial trunco-conical section 4 of the main body 1, and a second trunco-conical section 13 with an external smaller base and whose larger base has a diameter which is smaller than the diameter of the first cylindrical section 12, such that together the two sections define a flat-surfaced step 14 on which the dental prosthesis 2 is seated.

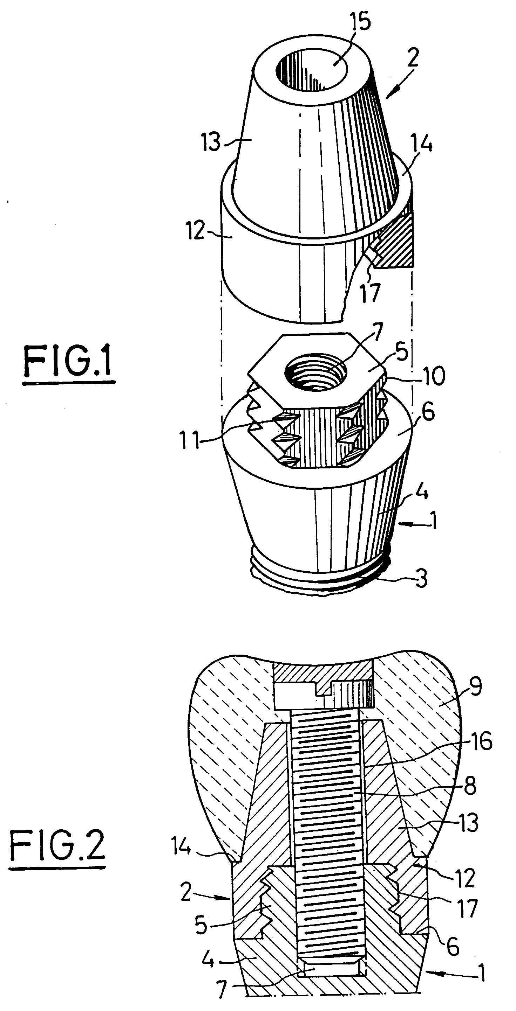

The pre-prosthetic collar 2 has a coaxial hole 15 of which two sections can be longitudinally defined: a first external section 16, whose length corresponds to that of the trunco-conical section 13 and whose diameter enables the bolt 8 for fixing the dental prosthesis 9 to pass with clearance, and a second internal section 17 which is threaded in correspondence with the screw thread defined by the notches 11 made in the edges 10 of the coaxial prismatic protuberance 5, in such a way that the pre-prosthetic collar 2 can be fitted by screwing to the prismatic protuberance 5 of the main body 1, as is shown in figure 2.

## Claims

1. A dental implant of the type that are used as supports for fixing dental prostheses (9) and which consist of a main body (1), externally threaded (3) in the form of a bolt, made of a metallic material such as, for example, titanium, designed to be implanted in a maxilla and provided at its external end with a coaxial, optionally trunco-conical section (4) on whose larger external base is arranged a protuberance (5), essentially a straight prism with a polygonal cross section and also coaxial with the main body (1), said protuberance being provided with a threaded central hole (7), also coaxial, suitable for receiving the coupling by screwing of a bolt (8) for fixing a dental prosthesis (9), characterized in that the external edges (10) of said prismatic protuberance (5) are provided with notches (11) which define a threading suitable for receiving the internal thread (17) which is made in the base (12) of a pre-prosthetic collar (2), said pre-prosthetic collar being provided with a coaxial through hole (15), wider at the base (12), through which passes the bolt (8) for fixing the prosthesis (9) to the implant, all in such a way that said pre-prosthetic collar (2) is adapted to be fitted solidly by screwing onto said prismatic protuberance (5) without the need for any additional bolts.

## Patentansprüche

1. Zahnimplantat, das als Träger zum Befestigen von Zahnprothesen (9) verwendet wird und das einen Hauptkörper (1) aufweist, der äußerlich nach Art einer Schraube mit einem Gewinde (3) versehen ist, der aus einem metallischen Material, wie z.B. Titan, gefertigt ist, der ausgebildet ist, um in einem Kiefer implantiert zu werden, und der an seinem äußeren Ende mit einem koaxialen, wahlweise kegelstumpfartigen Abschnitt (4) ausgestattet ist, auf dessen größerer, äußerer Grundfläche eine Erhebung (5) angeordnet ist, die im wesentlichen als ein gerades Prisma mit einem polygonalen Querschnitt und auch koaxial zum Hauptkörper (1) ausgebildet ist, wobei die Erhebung mit einer mittigen Gewindebohrung (7) ausgestattet ist, die auch koaxial ist und geeignet ist, eine Schraube durch Verschraubung aufzunehmen, um eine Zahnprothese (9) zu befestigen, dadurch gekennzeichnet, daß die äußeren Kanten (10) der prismatischen Erhebung (5) mit Kerben (11) versehen sind, die ein Gewinde bilden, das geeignet ist, das Innengewinde (17), das im Sockel (12) einer vorprothetischen Fassung (2) ausgebildet ist, aufzunehmen, wobei die vorprothetische Fassung mit einer koaxialen Durchgangsbohrung (15) ausgestattet ist, die am Sockel (12) breiter ist und durch die die Schraube (8) hindurchtritt, um die Prothese (9) an das Implantat zu befestigen, derart, daß die vorprothetische Fassung (2) so ausgelegt ist, daß sie durch Schrauben auf die prismatische Erhebung (5) fest eingesetzt wird, ohne daß zusätzliche Schrauben notwendig sind.

## Revendications

1. Implant dentaire utilisé comme support pour fixer des prothèses dentaires (9) et qui est composé d'un corps principal (1), fileté extérieurement (3) sous la forme d'une vis, fait d'une matière métallique telle que, par exemple, le titane, conçu pour être implanté dans un maxillaire et muni à son extrémité extérieure d'une section coaxiale (4) éventuellement tronconique, sur la grande base extérieure de laquelle est prévue une protubérance (5), essentiellement un prisme droit de section polygonale et elle aussi coaxiale au corps principal (1), ladite protubérance étant munie d'un trou central fileté (7), lui aussi coaxial, approprié pour recevoir l'accouplement par vissage d'une vis (8) servant à fixer une prothèse dentaire (9), caractérisé en ce que les arêtes extérieures (10) de ladite protubérance prismatique (5) sont munies d'encoches (11) qui définissent un filetage approprié pour recevoir le filetage intérieur (17) qui est pratiqué dans la base (12) d'un collet pré-prothétique (2), ledit collet pré-prothétique étant muni d'un trou traversant coaxial (15), plus large à la base (12), à travers lequel passe la vis (8) destinée à fixer la prothése (9) à l'implant, le tout de telle manière que ledit collet préprothétique (2) soit adapté pour être monté solidairement par vissage sur ladite protubérance prismatique (5) sans nécessiter de vis additionnelles.
